# EUROPEAN PATENT APPLICATION

(11) **EP 1 084 606 A2**
(43) Date of publication of application: **21.03.2001**
(21) Application number: 00830615.1
(22) Date of filing: 12.09.2000
(51) Int. Cl.: A01G 13/02

(54) **Protective covering for herbaceous or wooden plants**

(30) Priority: 17.09.1999 IT FI990109
(71) Applicant: Mondo Verde Casa E Giardino S.r.L., 50066 Reggello (Firenze) (IT)
(72) Inventor: Banci, Bernardo, 50136 Firenze (IT)
(74) Representative: Bardini, Marco Luigi

(57) **Abstract**

A protective covering for a herbaceous or wooden plant (6), consists of a quadrilateral sheet (1) made of a natural or synthetic material. Fastening means (2) are associated to opposite sides (1a, 1c) of said sheet (1). The fastening means can be operated in order to close said sides (1a, 1c) in a releasable and adjustable manner respectively over said plant (6) and around the trunk thereof, or around a pot (7) from which the plant (6) extends, whereby the sheet (1) forms an envelope which is interrupted by a substantially vertical cut, to be closed by mutually connecting the other two sides (1b, 1d) of the sheet so that the shape of the envelope fits the outline of the plant (6).

## Description

The present invention relates to the field of agriculture and gardening and namely it concerns a protective covering for herbaceous and wooden plants.

In order to protect herbaceous and wooden plants grown outdoor - that is to say not in hot houses - coverings made of a natural or synthetic fiber are often advantageously used. Such protection is beneficial, especially in order to defend the plants from winter time bad weather (e.g. frost, wind, snow, brackish waters, etc.) but also, generally speaking, from the effects of parasites, insects, little birds and rodents.

The fabric which is used must be permeable to air and water, so as to allow the irrigation and the transpiration. Moreover, it has to be very light, so that the growing of the plant is not hindered. Polypropylene or polyester non-woven fabric is used as a rule, since it complies with the above-mentioned requirement in a very satisfactory manner.

Known coverings are substantially sack shaped, and so they are inserted on the plant from the above. Afterwards, the free edge thereof is closed around the trunk of the plant, if present, or around a pot from which said plant stands.

Arranging the covering is often a troublesome operation, because the free edge of the sack is prone to abut against the plant branches and leaves which project irregularly sideways and upwards. Said abutment - as well as the manual bending of the branches which consequently is made necessary in order to allow the insertion of the sack - can bring about damages to the plant. Namely, this occurs when branches remarkably protruding from the outline of the plant are present, so that it is necessary to bend them to a great extent, or even to cut them off.

Besides, more generally speaking, the covering does not fit the irregular shape of the plant. In fact, the width of the sack is constant along the axial extension thereof. Therefore, only in certain areas the covering is substantially adjacent to the plant, i.e. in the condition which is most suitable to afford a satisfactory protection.

It is an object of the present invention to provide a protective covering for herbaceous or wooden plants which can be arranged on the plant in an easier way with respect to known sack-shaped coverings, without bringing about damages to said plant, and better fitting the outline thereof.

Said object is achieved with the protective covering for a herbaceous or wooden plant according to the present invention, characterized in that it comprises a quadrilateral sheet made of a natural or synthetic material and fastening means associated to opposite sides of said sheet which can be operated in order to close said sides in a releasable and adjustable manner respectively over the plant and around the trunk thereof, or around a pot from which the plant extends, whereby the sheet forms an envelope which is interrupted by a substantially vertical cut, to be closed by mutually connecting the other two sides of the sheet so that the shape of the envelope fits the outline of the plant.

The features and advantages of the protective covering for herbaceous of wooden plants according to the present invention will be made clearer hereinafter by way of the following description of an embodiment thereof, made purely as an example and not limitative, with reference to the attached drawings in which:
- figure 1 shows the covering according to the invention, in a stretched configuration;
- figure 2 depicts the covering of figure 1 when it is arranged on a plant.

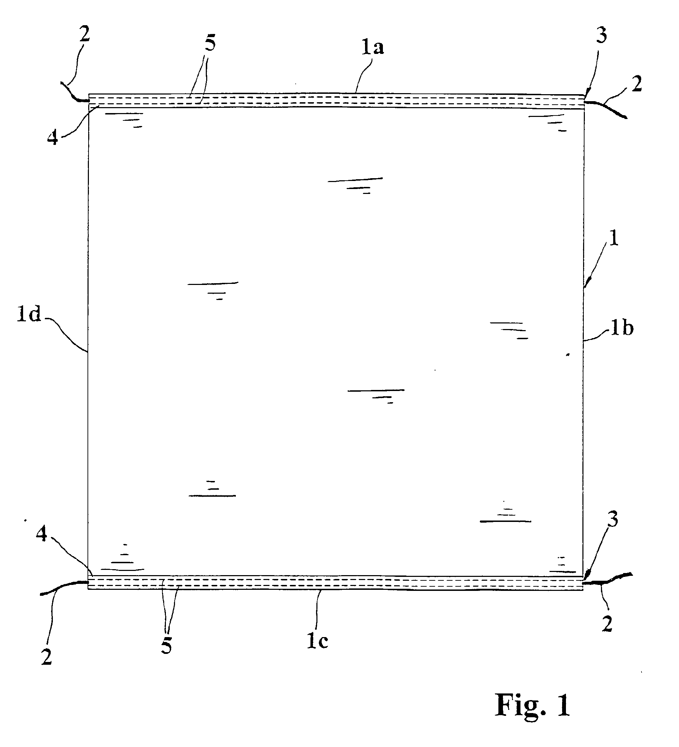

With reference to figure 1, the covering according to the invention consists of a quadrilateral sheet 1 having sides consecutively indicated at 1a, 1b, 1c and 1d, made of a light natural or preferably synthetic fabric, typically polypropylene or polyester non woven fabric, of a kind which is commonly used for analogues purposes in the prior art.

To opposite sides 1a, 1c of sheet 1 fastening means are associated, preferably consisting of respective ropes 2 slidably housed in pockets 3 formed along the same sides. Pockets 3 can be formed by bending sheet 1 along sides 1a, 1c and then sewing the bended edges. Otherwise, as in the depicted embodiment, two strips 4, made of the same fabric of sheet 1, can be fixed thereto via respective couple of seams 5.

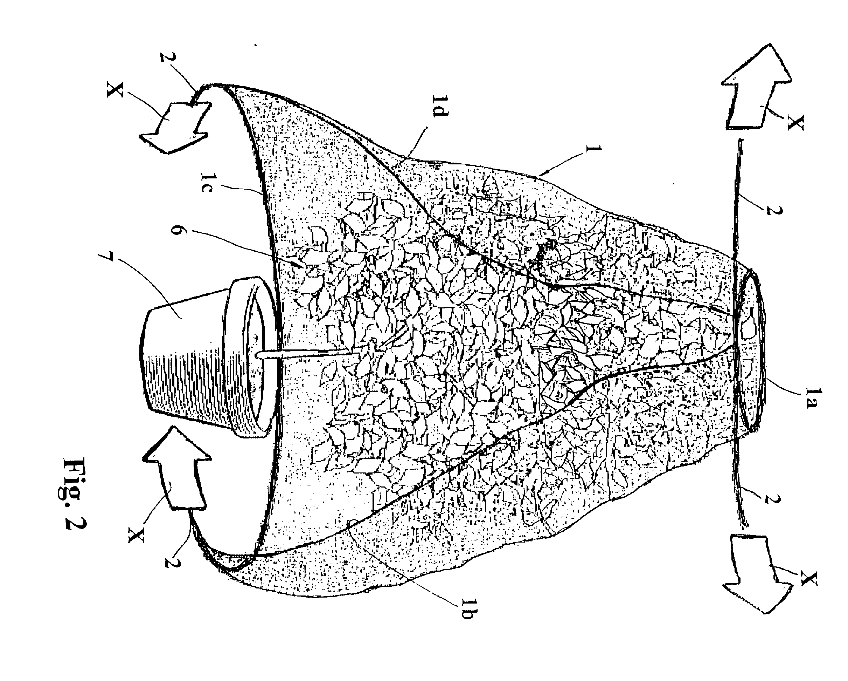

With reference also to figure 2, in use the covering according to the invention is arranged on a plant 6, standing from a pot 7, in order to protect it. This occurs as follows. One of the two sides of sheet 1 having pockets 3, in the depicted embodiment that indicated at 1a, is closed above plant 6 by pulling the relevant rope 2 - according to the direction indicated by arrows X - and then tying the same rope via a simple knot. Afterwards, the opposite side 1c is closed in the same way around pot 7, so that sheet 1, wrapping the plant, forms a protective envelope thereof.

The envelope formed in this way is interrupted by a vertical cut defined by sides 1b and 1d. Therefore, in order to close the covering and thus to obtain a complete protection, said sides are mutually connected, by means of adhesive, preferably double sided, tape fragments, not shown, or other equivalent means.

It will be apparent that, thanks to the fact that sheet 1 wraps the plant as a result of a radial movement, the arrangement of the covering according to the invention occurs in a very easy and quick manner, and above all preventing any damage to the plant itself.

Besides, thanks to the possibility of adjusting the closing action of ropes 2 on both sides 1a and 1c, but above all of varying the circumference of the envelope along the vertical axis thereof, placing the connection fragments of sides 1b and 1d in a suitable manner, the shape of the envelope can be fitted best to the irregular outline of the plant.

If the plant has a branch which remarkably projects out of the overall outline of the foliage, as often occurs, such branch can be left uncovered, extending out of the envelope through its cut, left open for the necessary length. In this way, an unnatural bending, or even a cutting off, of the branch can be avoided.

Advantageously, the above mentioned fragments of double sided tape can be made available, preliminarily cut, inside the sale package of the covering, housing sheet 1 in an appropriate bended configuration. As mentioned above, different connecting means can replace the adhesive tape, e.g. tongs, rings, buttons, etc., which may require the forming of slots or holes along sides 1b and 1d of sheet 1.

Sheet 1 will be made available in various sizes, so as to let the covering fit the size of the plant to be protected. Even though reference has been made to a wooden plant 6 in a pot 7, the covering can be applied in an analogous manner to a herbaceous plant, in a pot as well, or to a wooden plant set in the ground. In the latter case the lower side 1c of sheet 1 is closed directly around the trunk.

Furthermore, the covering, thanks to its sheet structure and to the provision of ropes 2, can satisfy protective needs which are different from the above-described one, this with the utmost versatility. In fact, sheet 1 can be suspended horizontally in a stretched configuration, supported at the four angles by respective uprights, above a group of plants, the connection with the uprights being made possible and very easy by ropes 2. Other possible advantageous arrangements provide the connection of sheet 1, even in this case by means of ropes 2, to a terrace railing, so as to wrap one or a plurality of hanging plants, supported by the railing, or to a wall, in order to protect one or a plurality of creeping plants. The above involves a further advantage of the covering according to the invention when compared to sack shaped known coverings, which can be used only for wrapping respective single plants.

Finally, it has to be noticed that the covering according to the invention, even though specifically designed for the protection of plants, can be employed also for pieces of furniture, cars, motorbikes, etc., particularly in all those cases in which the irregular shape of the object to be protected brings about problems which are equivalent to the above described ones.

Variations and/or modifications can be brought to the protective covering for a herbaceous or wooden plant according to the present invention, without departing from the scope of the invention itself as defined in the appended claims.

## Claims

1. A protective covering for a herbaceous or wooden plant (6), characterized in that it comprises a quadrilateral sheet (1) made of a natural or synthetic material and fastening means (2), associated to opposite sides (1a, 1c) of said sheet (1), which can be operated in order to close said sides (1a, 1c) in a releasable and adjustable manner respectively over said plant (6) and around the trunk thereof, or around a pot (7) from which said plant (6) extends, whereby said sheet (1) forms an envelope which is interrupted by a substantially vertical cut, to be closed by mutually connecting the other two sides (1b, 1d) of the sheet so that the shape of the envelope fits the outline of said plant (6).

2. A covering according to claim 1, comprising or associated to means for mutually connecting said sides (1b, 1d) of said sheet (1) defining said cut, in a partial or complete manner.

3. A covering according to claim 2, wherein said connecting means are double sided adhesive tape fragments.

4. A covering according to any of the previous claims, wherein said fastening means (2) comprise respective ropes (2) slidably housed within pockets (3) formed along the appropriate sides (1a, 1c).

5. A covering according to any of the previous claims, wherein said material is non woven fabric.

6. A covering according to claim 5, wherein said non woven fabric is made of polypropylene or polyester.
